# EUROPÄISCHE PATENTANMELDUNG

(11) **EP 2 175 159 A2**
(43) Veröffentlichungstag der Anmeldung: **14.04.2010**
(21) Anmeldenummer: 09171945.0
(22) Anmeldetag: 01.10.2009
(51) Int. Cl.: F16F 9/06

(54) **Drehschwingungsdämpfer**

(30) Priorität: 08.10.2008 DE 102008042664
(71) Anmelder: ZF Friedrichshafen AG, 88038 Friedrichshafen (DE)
(72) Erfinder: Gilsdorf, Heinz-Joachim, 97499 Donnersdorf (DE); Heyn, Steffen, 97464 Niederwerrn (DE); Förster, Andreas, 97422 Schweinfurt (DE)

(57) **Zusammenfassung**

Es wird ein Drehschwingungsdämpfer mit einem mindestens einen Statorflügel (1, 3) aufweisenden Stator (5) und einem mit wenigstens einem Flügel (7, 9) besetzten Rotor (11) vorgestellt, die zusammen mindestens zwei mit einem Dämpfungsmedium gefüllte, bei einer Relativbewegung zwischen Stator (5) und Rotor (11) gegensinnig ihr Volumen ändernde Arbeitskammern (13, 15) bilden, die Strömungen leitend über jeweils mindestens eine Strömungsverbindung (17, 19) mit einem wenigstens zwei Dämpfungseinheiten (25, 27) aufweisenden Ausgleichsraum (21) verbunden sind. Die Erfindung zeichnet sich dadurch aus, dass der Drehschwingungsdämpfer eine amplitudengesteuerte Dämpfung dergestalt aufweist, dass einer ersten, im Rotor (11) fest angeordneten Dämpfungseinheit (25) eine zweite, bewegbare Dämpfungseinheit (27) zugeordnet ist.

## Beschreibung

Die Erfindung betrifft einen Drehschwingungsdämpfer nach dem Oberbegriff des Patentanspruches 1.

Aus der DE 10 2004 026 043 B3 ist ein Drehschwingungsdämpfer mit einem mehrere Statorflügel aufweisenden Stator bekannt, in dem ein mit Flügeln besetzter Rotor um eine Rotationsachse drehbar aufgenommen ist. Bei einer Drehbewegung des Rotors um seine Rotationsachse werden mindestens zwei mit einem Dämpfungsmedium gefüllte und gegensinnig ihr Volumen ändernde Arbeitskammern gebildet, die Strömungen leitend über jeweils mindestens eine Strömungsverbindung mit einem wenigstens zwei Dämpfungseinheiten aufweisenden Ausgleichsraum verbunden sind. Die in dem Ausgleichsraum vorhandenen Dämpfungseinheiten sind bei der bekannten Ausführung ortsfest angeordnet. Die Dämpfungseinheiten weisen Dämpfventile, beziehungsweise Drosselstellen auf, die geeignet sind, das Dämpfungsverhalten des Drehschwingungsdämpfers gezielt zu beeinflussen.

Aus der DE 100 41 199 C1 ist darüber hinaus am Beispiel eines Teleskopstoßdämpfers eine Vorrichtung zur Schwingungsdämpfung bekannt, bei der ein beweglicher Kolben mit einem feststehenden Kolben in Form einer Reihenschaltung zweier Dämpfungseinheiten vorgesehen sind. Die Dämpfungseinheiten weisen jeweils Dämpfventile, beziehungsweise Drosselstellen auf und gestatten damit eine gezielte Beeinflussung des Dämpfungsverhaltens eines derartigen Teleskopstoßdämpfers. Der bewegliche Kolben ist ferner gegen die Kraft mehrerer Federelemente bewegbar.

Der Erfindung liegt die Aufgabe zugrunde, einen Drehschwingungsdämpfer bereitzustellen, der einfach und kompakt aufgebaut ist und dabei eine Einrichtung aufweist, die in Abhängigkeit der Anregungsamplitude die Dämpfungsgröße verändert.

Gelöst wird diese Aufgabenstellung mit den Merkmalen des Patentanspruches 1. Weitere Ausgestaltungen der Erfindung sind Gegenstand der Unteransprüche.

Ein Drehschwingungsdämpfer mit einem mindestens einen Statorflügel aufweisenden Stator und einem mit wenigstens einem Flügel besetzten Rotor, die zusammen mindestens zwei mit einem Dämpfungsmedium gefüllte, bei einer Relativbewegung zwischen Stator und Rotor gegensinnig ihr Volumen ändernde Arbeitskammern bilden, die ihrerseits Strömungen leitend über jeweils mindestens eine Strömungsverbindung mit einem wenigstens zwei Dämpfungseinheiten aufweisenden Ausgleichsraum verbunden sind, wurde erfindungsgemäß dahingehend weitergebildet, dass der Drehschwingungsdämpfer eine amplitudengesteuerte Dämpfung dergestalt aufweist, dass einer ersten, im Rotor fest angeordneten Dämpfungseinheit eine zweite, bewegbare Dämpfungseinheit zugeordnet ist.

Bei einer erfindungsgemäßen Lösung ist in Abhängigkeit der Anregungsamplitude der Wert der Dämpfung, der durch den erfindungsgemäßen Drehschwingungsdämpfer erreicht werden kann, beliebig variierbar und kann folglich vorab festgelegt werden. Diese bei Drehschwingungsdämpfern bisher nicht bekannte Möglichkeit der amplitudenselektiven Dämpfung erweitert das Einsatzspektrum derartiger Drehschwingungsdämpfer in entscheidendem Maße. Ferner ist eine Komfortsteigerung der mit den erfindungsgemäßen Drehschwingungsdämpfern ausgestatteten Kraftfahrzeuge durch eine Verbesserung der Radaufhängungen zu verzeichnen.

Eine erste Ausgestaltung der Erfindung bezieht sich darauf, dass beide Dämpfungseinheiten Bestandteil einer als vormontierbare Baueinheit ausgeführten Patrone sind. Damit kann der Drehschwingungsdämpfer sehr kompakt ausgeführt werden und seine Montage ist einfacher, als dies bei bekannten Drehschwingungsdämpfern der Fall ist.

Darüber hinaus wird eine vorteilhafte Variante eines Drehschwingungsdämpfers vorgeschlagen, bei der der ersten, im Rotor fest angeordneten Dämpfungseinheit eine zweite, gegen die Kraft mindestens eines elastischen Federelementes bewegbare Dämpfungseinheit zugeordnet ist.

Die Variantenvielfalt eines Drehschwingungsdämpfers nach der Erfindung zeigt sich auch darin, dass die erste und die zweite Dämpfungseinheit parallel zueinander oder in Reihe zueinander geschaltet sein können. Damit lassen sich die Dämpfungscharakteristiken eines Drehschwingungsdämpfers gezielt beeinflussen.

Im Zuge des Bestrebens, die kompakte Ausführung eines Drehschwingungsdämpfers zu verbessern, geht ein weiterer Vorschlag dahin, dass beide Dämpfungseinheiten wechselseitig von dem Dämpfungsmedium durchströmbar sind. Durch diese wechselseitige Durchströmbarkeit können die strömungsleitenden Verbindungen unmittelbar in den Dämpfungseinheiten vorgesehen werden, so dass keine zusätzlichen Strömungskanäle erforderlich sind.

Eine Weiterbildung der Erfindung besteht darin, dass beide Dämpfungseinheiten in dem Ausgleichsraum, zwischen einer ersten Strömungsverbindung zur ersten Arbeitskammer und einer zweiten Strömungsverbindung zur zweiten Arbeitskammer angeordnet sind. In diesen Merkmalen drückt sich insbesondere die kompakte Bauweise des erfindungsgemäßen Drehschwingungsdämpfers aus, weil eine Vielzahl funktionswesentlicher Bauelemente auf kleinstem Raum angeordnet sind. Dabei ist insbesondere auch von Bedeutung, dass die zur Dämpfung zum Einsatz kommenden Elemente des Drehschwingungsdämpfers innerhalb des Rotors vorgesehen werden. Dies bedeutet eine optimale Raumausnutzung nach der vorliegenden Erfindung.

Bevorzugt wird die zweite, bewegbare Dämpfungseinheit als ein in dem Ausgleichsraum verschiebbarer Kolben mit darin vorhandenen Dämpfventilen ausgeführt. Die Gestaltung der Dämpfungseinheit als ein verschiebbarer Kolben weist mehrere Vorteile auf. So kann damit die Möglichkeit geschaffen werden, in dem Kolben Dämpfventile vorzusehen. Dies trägt zu der Lösung der Aufgabenstellung bei, den Drehschwingungsdämpfer insgesamt kompakt ausführen zu können. Darüber hinaus ist der Kolben jedoch auch geeignet, innerhalb des Ausgleichsraumes gegen die Kraft zumindest eines elastischen Federelementes verschoben zu werden.

Eine spezielle Ausführungsvariante besteht darin, dass die zweite Dämpfungseinheit ein beidseitig durch elastische Federelemente beaufschlagter Kolben ist. Dies trägt dem Umstand Rechnung, dass die Dämpfungseinheit wechselseitig durchströmt werden kann. Somit lassen sich in beiden Bewegungsrichtungen der Dämpfungseinheit gezielt die Eigenschaften der Dämpfung der im Drehschwingungsdämpfer vorhandenen Dämpfflüssigkeit beeinflussen. Als elastische Federelemente können Federn beliebiger Bauart oder Elastomerkörper zum Einsatz kommen.
Ferner ist vorgesehen, dass der Kolben beidseitig durch zwei elastische Federelemente unterschiedlicher Federkonstanten beaufschlagt wird, was neben der wechselseitigen Durchströmbarkeit mit dem Dämpfungsmedium den Vorteil hat, dass damit auf einfache Weise eine amplitudenselektive Dämpfung erreichbar ist, weil das Federelement mit der höheren Federkonstante erst ab einem Wert anspricht, wenn das Federelement mit der niedrigeren Federkonstante einen vorgegebenen Grenzwert erreicht hat. Somit lassen sich innerhalb des Drehschwingungsdämpfers mehrere Dämpfungsstufen durch einfache konstruktive Mittel erreichen, indem nämlich eine definierte Folge der Dämpfungseinheiten und der vorgesehenen elastischen Federelemente eingehalten wird.

Eine Weiterbildung der Erfindung sieht darüber hinaus vor, dass die erste Dämpfungseinheit Drosselstellen aufweist, die in der jeweiligen Abströmrichtung zumindest teilweise von Ventilplatten abgedeckt sind. Die erste, im Drehschwingungsdämpfer fest angeordnete Dämpfungseinheit stellt ein Element dar, das aus Drehschwingungsdämpfern bisher bekannter Bauart bereits bekannt ist. Die Erweiterung des erfindungsgemäßen Drehschwingungsdämpfers um eine zweite Dämpfungseinheit, die innerhalb des Ausgleichsraumes bewegbar ist, bildet jedoch eine neue, die Eigenschaften des Drehschwingungsdämpfers insgesamt verbessernde Variante.

Eine sehr vorteilhafte und alternative Ausführung eines erfindungsgemäßen Drehschwingungsdämpfers wird darin gesehen, dass die zweite Dämpfungseinheit in einem Kolbenraum innerhalb der Patrone angeordnet ist und aus einer fest in dem Kolbenraum installierten Dämpferplatte mit einem Durchlass für das Dämpfungsmedium sowie einem in dem Kolbenraum verschiebbar angeordneten Kolben besteht. Diese spezielle Lösung ist insbesondere für die Parallelschaltung der Dämpfungseinheiten geeignet und stellt eine kompakte Variante dar.

Gemäß einem weitergehenden Vorschlag kann der Kolben aus elastischem Material bestehen und beidseitig Anschlagpuffer aufweisen. Ebenso ist es jedoch möglich, dass nur die Anschlagpuffer aus einem elastischen Werkstoff hergestellt sind und der Kolben selbst beispielsweise aus Metall oder einem anderen, festen Material besteht. Dabei ist die zweite Dämpfungseinheit bei dieser Ausführungsform auf einem Profil der Patrone in dem Ausgleichsraum angeordnet.

Unabhängig von der Gestaltung der Dämpfungseinheiten sind erfindungsgemäße Drehschwingungsdämpfer **dadurch gekennzeichnet, dass** sie einen, durch einen verschiebbaren Trennkolben vom Ausgleichsraum abgetrennten, einen Temperaturausgleich gewährleistenden Kompensationsraum aufweisen. Dieser Kompensationsraum kann in an sich bekannter Weise ein Ausgleichsmedium enthalten. Da sich der Drehschwingungsdämpfer infolge der inneren Reibung des Dämpfungsmediums während seines Betriebes erwärmt und dies eine Volumenvergrößerung nach sich zieht, ist die Verwendung eines Trennkolbens mit einem dahinter befindlichen Kompensationsraum von Vorteil.

Zwischen dem in den Ausgleichsraum mündenden Verbindungskanal und dem Trennkolben ist gemäß einem weiteren Vorschlag der Erfindung ein Ventilträger angeordnet, der mittels darin vorhandener Durchströmöffnungen einen Druckabfall bewirkt, wenn der Druck im Verbindungskanal größer ist, als der Druck im Kompensationsraum.

Eine ebenfalls sehr vorteilhafte Ausführungsvariante eines erfindungsgemäßen Drehschwingungsdämpfers besteht darin, dass die Patrone zumindest teilweise in eine Hülse eingesetzt ist. Diese Hülse kann dabei in vorteilhafter Weise in ihrer Mantelfläche ein Strömungskanalsystem aufweisen, das eine Verbindung zwischen dem Ausgleichsraum und zumindest einer zu den Arbeitskammern führenden Strömungsverbindungen bildet. Bevorzugt kann das Strömungskanalsystem zwischen Hülse und Rotor bezogen auf den Rotor Strömungskanäle in axialer Richtung aufweisen. Durch diese Ausführung eines Drehschwingungsdämpfers kann das Strömungskanalsystem nahezu beliebig ausgeführt werden und beispielsweise auch eine Dämpfung innerhalb des Strömungskanalsystems bewirken, die durch das Hin- und Herschwingen der Flüssigkeitssäule in dem Strömungskanalsystem erreicht wird. Ein weiterer Vorteil des Einsatzes der Hülse zur Aufnahme der Patrone besteht darin, dass der Drehschwingungsdämpfer damit kompakter ausgeführt werden kann und somit die eingangs gestellte Aufgabenstellung in verbesserter Weise lösbar ist.

Eine Alternative hierzu besteht ferner darin, dass die Hülse mit ihrer äußeren Mantelfläche zusammen mit der korrespondierenden Innenoberfläche des Rotors ein Strömungskanalsystem bildet. Diese Variante hat den Vorteil, dass die Hülse sehr einfach ausführbar ist, da beispielsweise ein einfacher Rohrabschnitt als Hülse Verwendung finden kann. Das Strömungskanalsystem lässt sich hierbei zum Beispiel schon durch einfache Maßnahmen, wie geeignete Maßtoleranzen zwischen Hülse und Innenoberfläche des Rotors erzielen. Es ist jedoch auch möglich, das Strömungskanalsystem in die Innenoberfläche des Rotors einzuarbeiten.

Die Erfindung wird nachfolgend anhand der beigefügten Figuren näher erläutert. Darin sind mehrere, bevorzugte Ausführungsformen dargestellt, was jedoch keine Einschränkung auf die gezeigten Varianten bedeutet, sondern lediglich der Erläuterung des Prinzips der Erfindung dient. Gleiche oder gleichartige Bauteile sind jeweils mit denselben Bezugszeichen benannt.

Um die erfindungsgemäße Funktionsweise veranschaulichen zu können, werden in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

### Es zeigen:

- Figur 1:: einen Längsschnitt durch einen erfindungsgemäßen Drehschwingungsdämpfer in einer ersten Ausführungsvariante,
- Figur 2:: den Schnittverlauf II-II aus Figur 1,
- Figur 3:: einen Längsschnitt durch einen Drehschwingungsdämpfer nach der Erfindung entsprechend einer zweiten Ausführungsvariante
und
- Figur 4:: den Längsschnitt durch einen Drehschwingungsdämpfer entsprechend einer dritten Ausführungsvariante.

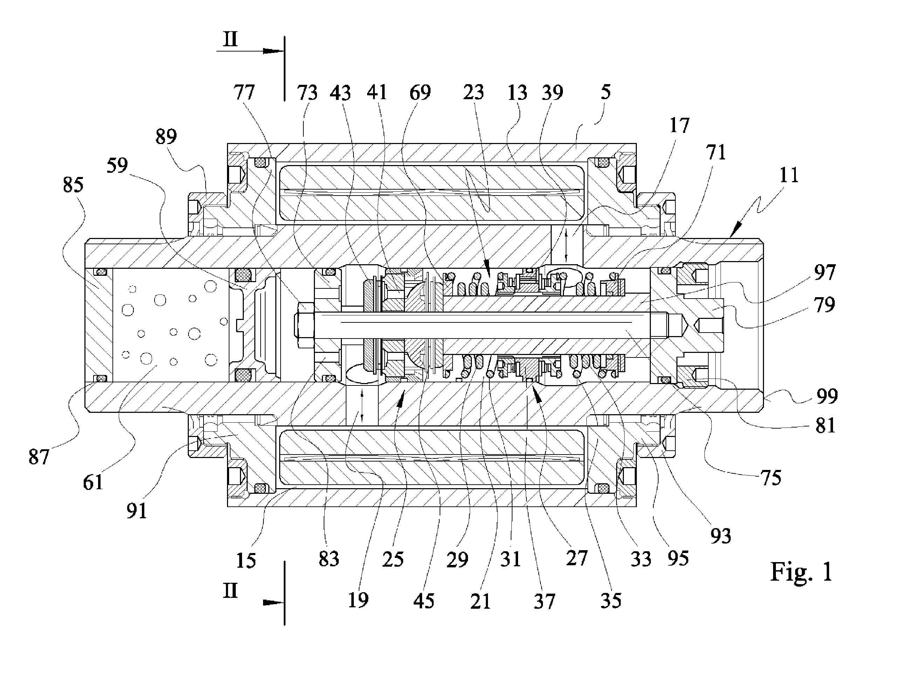

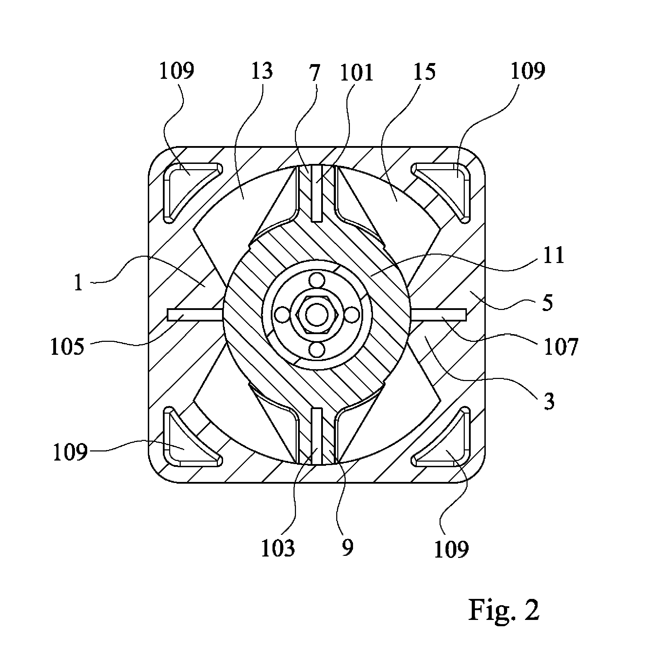

Der in der Figur 1 gezeigte Längsschnitt durch eine erste Ausführungsvariante eines erfindungsgemäßen Drehschwingungsdämpfers zeigt, dass dieser Drehschwingungsdämpfer aus einem Stator 5 besteht, der vorliegend ein Gehäuse des Drehschwingungsdämpfers bildet. In dem Stator 5 ist ein Rotor 11 drehbeweglich gelagert. Das Zusammenwirken zwischen Stator 5 und Rotor 11 wird nachfolgend noch im Zusammenhang mit den Erläuterungen zu der Figur 2 näher beschrieben. Der Stator 5 weist Statorflügel 1, 3 auf, wobei der Rotor 11 mit korrespondierenden Flügeln 7, 9 ausgestattet ist. In dem Drehschwingungsdämpfer werden durch die Flügel 7, 9 des Rotors 11 Arbeitskammern 13, 15 gebildet, die bei einer Relativbewegung zwischen Stator 5 und Rotor 11 gegensinnig ihr Volumen ändern. Die Arbeitskammern 13 und 15 sind strömungsleitend miteinander verbunden. Der Übergang von der Arbeitskammer 13 zu einem zentralen Ausgleichsraum 21 wird durch eine Strömungsverbindung 17 gebildet, während der Übergang von der Arbeitskammer 15 zum Ausgleichsraum 21 durch die Strömungsverbindung 19 geschaffen ist. Somit besteht eine Strömungsverbindung zwischen den beiden Arbeitskammern 13 und 15, der jedoch der Ausgleichsraum 21 zwischengeschaltet ist. Die erfindungsgemäße Besonderheit besteht nun einerseits darin, dass der Ausgleichsraum 21 innerhalb des Rotors 11 ausgebildet ist. Der Ausgleichsraum 21 nimmt gleichfalls zwei Dämpfungseinheiten 25 und 27 auf. Dabei ist die Dämpfungseinheit 25 innerhalb des Ausgleichsraumes 21 feststehend angeordnet, während die Dämpfungseinheit 27 innerhalb des Ausgleichsraumes 21 als ein verschiebbar gelagerter Kolben 37 ausgeführt ist. Die Dämpfungseinheit 27 kann innerhalb des Ausgleichsraumes 21 gegen die Kraft mehrerer Federelemente 29, 31, 33 und 35 hin und her bewegt werden. Die Auslegung der Federn 29, 31, 33 und 35 definiert dabei die Dämpfung im Zusammenhang mit der zu der zweiten Dämpfungseinheit 27 in Reihe geschalteten, ersten Dämpfungseinheit 25. Bei der Ausführungsvariante in Figur 1 sind der als Kolben 37 ausgebildeten Dämpfungseinheit 27 beidseitig jeweils zwei Federelemente zugeordnet. In der Zeichnung linksseitig der zweiten Dämpfungseinheit 27 ist ein inneres Federelement 29 mit einer äußeren Feder 31 kombiniert, deren Federkonstanten sich voneinander unterscheiden. Analoge Federkonstanten weisen die im rechten Bildteil mit der zweiten Dämpfungseinheit 27 zusammenwirkende innere Feder 33 sowie die äußere Feder 35 auf. Die Federn 29, 31, 33 und 35 stützen sich auf der der Dämpfungseinheit 27 gegenüberliegenden Seite gegen je einen Federteller 69 beziehungsweise 71 ab. Die Bewegbarkeit der zweiten Dämpfungseinheit 27 kann entlang einer Führung erfolgen, die in der Figur 1 jedoch nicht dargestellt ist. Die als Kolben 37 ausgeführte, wechselseitig durchströmbare zweite Dämpfungseinheit 27 weist zur Dämpfung des hindurchströmenden Dämpfungsmediums Dämpfventile 39 auf.

Die erste, feststehende Dämpfungseinheit 25 verfügt über Drosselstellen 41, die ebenfalls beidseitig von dem Dämpfungsmedium durchströmt werden können. Zum zumindest teilweisen Verschluss dieser Drosselstellen 41 dienen beidseitig der Dämpfungseinheit 25 Ventilplatten 43 und 45, die sich je nach anstehendem Druck des Dämpfungsmediums öffnen oder schließen.

Die beiden Dämpfungseinheiten 25 und 27 sind Bestandteile einer als Baueinheit vormontierbaren Patrone 23. Den Abschluss dieser Patrone bildet im linksseitigen Teil der Figur 1 ein Ventilträger 73, der seinerseits Durchströmöffnungen 83 aufweist und insbesondere für den temperaturbedingten Druckausgleich innerhalb des Drehschwingungsdämpfers verantwortlich ist. Die Patrone 23 ist insgesamt auf einem Bolzen 75 montiert und mit einer Sechskantmutter 77 fixiert, die die Bauelemente zusammenhält. Der Bolzen 75 durchdringt dabei den Ventilträger 73, die erste und die zweite Dämpfungseinheit 25 beziehungsweise 27 und ist am Ende mit einer Verschlussscheibe 79 verschraubt. Die zweite Ventileinheit 27 ist ferner auf einem Rohr 97 verschiebbar im Sinne einer Führung angeordnet. Das Rohr 97 nimmt ferner den Bolzen 75 auf.

Die Verschlussscheibe 79 ermöglicht eine Fixierung der Patrone 23 im Ausgleichsraum 21 des Rotors 11. Zur Festlegung der Verschlussscheibe 79 innerhalb des Rotors 11 dient dabei ein Schraubring 81. Der Schraubring 81 ist von der Außenseite des Rotors 11 zugänglich und verfügt über Eingriffsausnehmungen für geeignete Werkzeuge. Die temperaturabhängigen Volumenänderungen des Dämpfungsmediums innerhalb des Drehschwingungsdämpfers werden, wie dies bereits ausgeführt wurde, einerseits mittels des Ventilträgers 73 und mehrerer darin enthaltener Durchströmöffnungen 83 ermöglicht. Zudem ist in dem Ausgleichsraum 21 ein verschiebbarer und gegenüber dem Ausgleichsraum 21 abgedichteter Trennkolben 59 vorhanden, der eine Kompensation der temperaturabhängigen Ausdehnung des Dämpfungsmediums ermöglicht. In Zusammenwirkung mit einem Kompensationsraum 61, in dem ein komprimierbares Ausgleichsmedium enthalten ist, kann durch eine Ausweichbewegung des Trennkolbens 59 eine temperaturbedingte Schwankung des Dämpfungsmediums ausgeglichen werden, so dass eine Volumenvergrößerung des Dämpfungsmediums sich nicht schädigend auf die Bauteile des Drehschwingungsdämpfers auswirkt. Verschlossen wird der Kompensationsraum 61 durch einen Deckel 85, der mit geeigneten Dichtungen 87 gegenüber der Umgebung abgedichtet ist. Um den Stator 5, der im vorliegenden Fall ein Gehäuse des Drehschwingungsdämpfers bildet, gegenüber der Umgebung hinreichend abzudichten und den Rotor 11 innerhalb des Stators 5 drehbewegbar aufnehmen zu können, wird der Stator 5 mit Verschlussdeckeln 89 sowie 93 verschlossen. Diese Verschlussdeckel 89 und 93 weisen dabei an den Außenseiten des Stators 5 jeweils einen Dichtungsring 91 beziehungsweise 95 zur Aufnahme verschiedener, für die Abdichtung des Systems geeigneter Dichtungen auf.

Der Schnittverlauf II-II aus Figur 1 zeigt die Darstellung in Figur 2. Hieraus ist ersichtlich, dass der Rotor 11 über zwei einander diametral gegenüberliegend angeordnete Flügel 7 und 9 verfügt. Die Flügel 7 und 9 weisen Flügeldichtungen 101 und 103 auf. An dem Stator 5 sind zwei einander diametral gegenüberliegend angeordnete Statorflügel 1 beziehungsweise 3 vorhanden. Diese Statorflügel 1, 3 verfügen ihrerseits über Flügeldichtungen 105 beziehungsweise 107. Durch die Anordnung der Flügel 7 und 9 am Rotor 11 werden im Stator 5 zwei Arbeitskammern 13 und 15 definiert. Bei einer Rotation des Rotors 11 um seine Rotationsachse verändert sich das Volumen der Arbeitskammern 13 und 15 wechselseitig. Das dabei verdrängte Dämpfungsmedium wird von einer Arbeitskammer über die Strömungsverbindungen 17 und 19 zu der jeweils anderen Arbeitskammer gepumpt. Dabei passiert das Dämpfungsmedium den Ausgleichsraum 21 mit der darin vorhandenen Patrone 23. Zur Verbesserung der Abführung entstehender Wärme weist der Stator 5 ferner an seiner Mantelfläche diverse Ausnehmungen 109 und/oder Rippen auf.

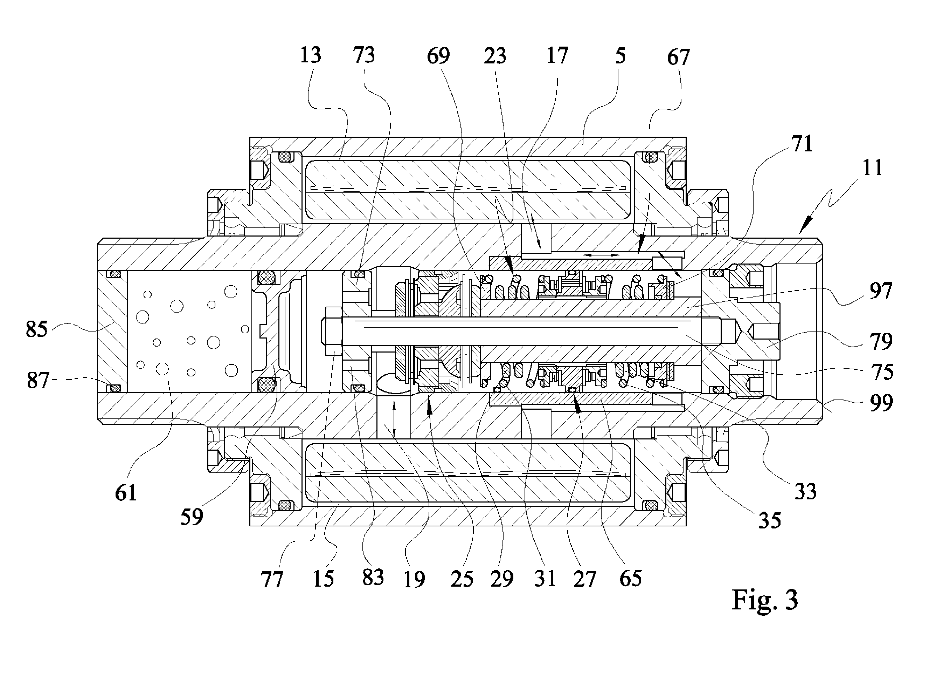

Eine vom grundsätzlichen Aufbau her und in der Funktionsweise zu der im Zusammenhang mit der Figur 1 erläuterten Ausführungsvariante ähnliche Bauform ist in der Figur 3 dargestellt. der wesentliche Unterschied der Ausführung gemäß Figur 3 besteht darin, dass die Patrone 23 zu einem überwiegenden Anteil in einer Hülse 65 aufgenommen ist. Dabei sollte zumindest der Teil der Patrone 23 in der Hülse 65 angeordnet werden, der der zweiten Dämpfungseinheit 27 entspricht. Mit der in dem Rotor 11 angeordneten Hülse 65 lässt sich auf einfache Weise ein Strömungskanalsystem 67 schaffen, das eine beliebige Führung der Strömungskanäle ermöglicht. Somit ist sogar eine Dämpfung innerhalb dieses Strömungskanalsystems 67 möglich. Das Strömungskanalsystem 67 ist hier Bestandteil der Strömungsverbindungen 17. Durch die Anordnung der Dämpfungseinheit 27 innerhalb der Hülse 65 kann eine gezielte axiale Beweglichkeit der Dämpfungseinheit 27 erreicht werden. Die Verwendung der Hülse 65 und die Einbringung eines Strömungskanalsystems 67 in die Hülse 65 ermöglicht die Verlagerung der Verschlussscheibe 79 bis diese axial bündig mit dem Rotorende 99 angeordnet ist. Durch eine derartige Verschiebung der gesamten Patrone 23 innerhalb des Rotors 11 steht ein zusätzlicher Bauraum zur Verfügung, der beispielsweise dazu genutzt werden kann, den Kompensationsraum 61 in geeigneter Größe auszulegen. Dies stellt einen wesentlichen Vorteil einer derartigen Ausführung dar. Andererseits ist damit auch die Möglichkeit zu einer kompakteren Ausführung des gesamten Drehschwingungsdämpfers gegeben.

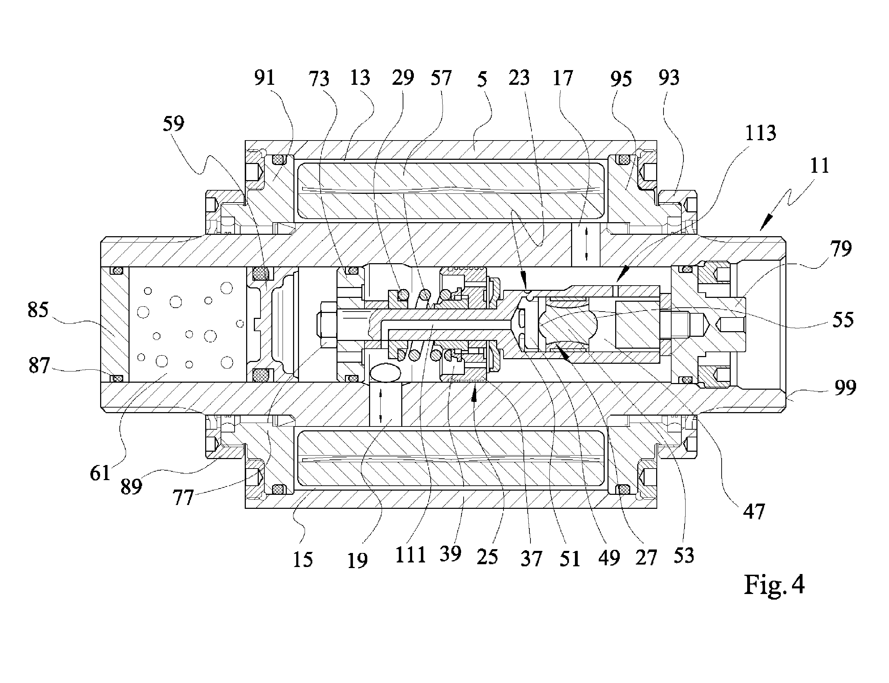

Eine spezielle, dritte Ausführungsvariante eines erfindungsgemäßen Drehschwingungsdämpfers wird im Zusammenhang mit dem Längsschnitt in Figur 4 erläutert. Dieser im Grundaufbau zu den zuvor beschriebenen Varianten gleich ausgeführte Drehschwingungsdämpfer weist die Besonderheit auf, dass die Patrone 23 über einen Kolbenraum 47 verfügt, in dem die zweite Dämpfungseinheit 27 angeordnet ist. Die zweite Dämpfungseinheit 27 besteht dabei aus einer in dem Kolbenraum 47 fest angeordneten Dämpferplatte 49, die einen ständig offenen Durchlass 51 aufweist. Ferner ist in dem Kolbenraum 47 ein axial bewegbarer Kolben 53 vorhanden, an dem beidseitig aus einem elastischen Werkstoff hergestellte Anschlagpuffer 55 vorgesehen sind. Die erste Dämpfungseinheit 25, welche einen ortsfest auf einem Profil 57 angeordneten Kolben 37 aufweist, befindet sich außerhalb des Kolbenraumes 47 im Ausgleichsraum 21. Der Kolben 37 weist Dämpfventile 39 auf.

Die Funktionsweise der Dämpfungseinrichtung ist dabei Folgende: Wird der Rotor 11 um seine Rotationsachse gedreht, so ändert sich das Volumen der Arbeitskammern 13 beziehungsweise 15, wobei durch die Verdrängung des Dämpfungsmediums beispielsweise über die Strömungsverbindung 19 Dämpfungsmedium in den Ausgleichsraum 21 verdrängt wird. Hier tritt das Dämpfungsmedium zunächst über einen Kanal 111 in den Kolbenraum 47 über. Das Einströmen des Dämpfungsmediums über den Kanal 111 in den Kolbenraum 47 wird durch den ständig offenen Durchlass 51 ermöglicht. Durch den somit im Kolbenraum 47 linksseitig des dort vorhandenen Kolbens 53 anwachsenden Druck wird der Kolben 53 in axialer Richtung innerhalb des Kolbenraumes 47 verschoben. Der Weg des Kolbens 53 ist durch einen Anschlag an einer zugeordneten Fläche des Kolbenraumes 47 begrenzt. Zur Reduzierung der Wirkungen dieses Anschlagens des Kolbens 53 weist der Kolben 53 Anschlagpuffer 55 auf. Solange sich der Kolben in Richtung Anschlag bewegt, strömt Dämpfungsmedium über die Öffnung 113 ab und wird nach Erreichen eines definierten Differenzdruckes durch die parallel geschaltete, erste Dämpfungseinheit 25 weiter gedämpft, bevor ein Übertreten in die zweite Arbeitskammer 13 erfolgt.

### Bezugszeichenliste

- 1: Statorflügel
- 3: Statorflügel
- 5: Stator
- 7: Flügel
- 9: Flügel
- 11: Rotor
- 13: Arbeitskammer
- 15: Arbeitskammer
- 17: Strömungsverbindung
- 19: Strömungsverbindung
- 21: Ausgleichsraum
- 23: Patrone
- 25: Dämpfungseinheit
- 27: Dämpfungseinheit
- 29: Federelement
- 31: Federelement
- 33: Federelement
- 35: Federelement
- 37: Kolben
- 39: Dämpfventil
- 41: Drosselstelle
- 43: Ventilplatte
- 45: Ventilplatte

- 47: Kolbenraum
- 49: Dämpferplatte
- 51: Durchlass
- 53: Kolben
- 55: Anschlagpuffer
- 57: Profil
- 59: Trennkolben
- 61: Kompensationsraum
- 65: Hülse
- 67: Strömungskanalsystem
- 69: Federteller
- 71: Federteller
- 73: Ventilträger
- 75: Bolzen
- 77: Sechskantmutter
- 79: Verschlussscheibe
- 81: Schraubring
- 83: Durchströmöffnung
- 85: Deckel
- 87: Dichtung
- 89: Verschlussdeckel
- 91: Dichtungsring
- 93: Verschlussdeckel
- 95: Dichtungsring
- 97: Rohr
- 99: Rotorende
- 101: Flügeldichtung
- 103: Flügeldichtung
- 105: Flügeldichtung
- 107: Flügeldichtung
- 109: Ausnehmung
- 111: Kanal
- 113: Öffnung

## Patentansprüche

1. Drehschwingungsdämpfer mit einem mindestens einen Statorflügel (1, 3) aufweisenden Stator (5) und einem mit wenigstens einem Flügel (7, 9) besetzten Rotor (11), die zusammen mindestens zwei mit einem Dämpfungsmedium gefüllte, bei einer Relativbewegung zwischen Stator (5) und Rotor (11) gegensinnig ihr Volumen ändernde Arbeitskammern (13, 15) bilden, die Strömungen leitend über jeweils mindestens eine Strömungsverbindung (17, 19) mit einem wenigstens zwei Dämpfungseinheiten (25, 27) aufweisenden Ausgleichsraum (21) verbunden sind,
**dadurch gekennzeichnet, dass**
der Drehschwingungsdämpfer eine amplitudengesteuerte Dämpfung dergestalt aufweist, dass einer ersten, im Rotor (11) fest angeordneten Dämpfungseinheit (25) eine zweite, bewegbare Dämpfungseinheit (27) zugeordnet ist.

2. Drehschwingungsdämpfer nach Anspruch 1,
**dadurch gekennzeichnet, dass**
beide Dämpfungseinheiten (25, 27) Bestandteil einer als vormontierbare Baueinheit ausgeführten Patrone (23) sind.

3. Drehschwingungsdämpfer nach Anspruch 1 oder 2,
**dadurch gekennzeichnet, dass**
der ersten, im Rotor (11) fest angeordneten Dämpfungseinheit (25) eine zweite, gegen die Kraft mindestens eines elastischen Federelementes (29, 31, 33, 35) bewegbare Dämpfungseinheit (27) zugeordnet ist.

4. Drehschwingungsdämpfer nach einem der vorstehend genannten Ansprüche,
**dadurch gekennzeichnet, dass**
die erste Dämpfungseinheit (25) und die zweite Dämpfungseinheit (27) parallel zueinander oder in Reihe geschaltet sind.

5. Drehschwingungsdämpfer nach einem der vorstehend genannten Ansprüche,
**dadurch gekennzeichnet, dass**
beide Dämpfungseinheiten (25, 27) wechselseitig von dem Dämpfungsmedium durchströmbar sind.

6. Drehschwingungsdämpfer nach einem der vorstehend genannten Ansprüche,
**dadurch gekennzeichnet, dass**
beide Dämpfungseinheiten (25, 27) im Ausgleichsraum (21) zwischen einer ersten Strömungsverbindung (17) zur ersten Arbeitskammer (13) und einer zweiten Strömungsverbindung (19) zur zweiten Arbeitskammer (15) angeordnet sind.

7. Drehschwingungsdämpfer nach einem der vorstehend genannten Ansprüche,
**dadurch gekennzeichnet, dass**
die bewegbare, zweite Dämpfungseinheit (27) als ein in dem Ausgleichsraum (21) verschiebbarer Kolben (37) mit darin vorhandenen Dämpfventilen (39) ausgeführt ist.

8. Drehschwingungsdämpfer nach einem der vorstehend genannten Ansprüche,
**dadurch gekennzeichnet, dass**
die bewegbare, zweite Dämpfungseinheit (27) als ein in dem Ausgleichsraum (21) gegen die Kraft zumindest eines elastischen Federelementes (29, 31, 33, 35) verschiebbarer Kolben (37) mit darin vorhandenen Dämpfventilen (39) ausgeführt ist.

9. Drehschwingungsdämpfer nach Anspruch 7 oder 8,
**dadurch gekennzeichnet, dass**
die zweite Dämpfungseinheit (27) ein beidseitig durch elastische Federelemente (29, 31, 33, 35) beaufschlagter Kolben (37) ist.

10. Drehschwingungsdämpfer nach einem der Ansprüche 7 bis 9,
**dadurch gekennzeichnet, dass**
der Kolben (37) der zweiten Dämpfungseinheit (27) beidseitig durch zwei elastische Federelemente (29, 31, 33, 35) unterschiedlicher Federkonstanten beaufschlagt ist.

11. Drehschwingungsdämpfer nach einem der vorstehend genannten Ansprüche,
**dadurch gekennzeichnet, dass**
die erste Dämpfungseinheit (25) Drosselstellen (41) aufweist, die in der jeweiligen Abströmrichtung zumindest teilweise von Ventilplatten (43, 45) abgedeckt sind.

12. Drehschwingungsdämpfer nach einem der Ansprüche 1 bis 5,
**dadurch gekennzeichnet, dass**
die zweite Dämpfungseinheit (27) in einem Kolbenraum (47) innerhalb der Patrone (23) angeordnet ist und aus einer fest in dem Kolbenraum (47) angeordneten Dämpferplatte (49) mit einem Durchlass (51) für das Dämpfungsmedium und einem in dem Kolbenraum (47) verschiebbar angeordneten Kolben (53) besteht.

13. Drehschwingungsdämpfer nach Anspruch 12,
**dadurch gekennzeichnet, dass**
der Kolben (53) über aus elastischem Material bestehende Anschlagpuffer (55) verfügt oder der Kolben (53) insgesamt aus elastischem Material besteht und beidseitig Anschlagpuffer (55) aufweist.

14. Drehschwingungsdämpfer nach Anspruch 12 oder 13,
**dadurch gekennzeichnet, dass**
die erste Dämpfungseinheit (25) ortsfest auf einem Profil (57) der Patrone (23) in dem Ausgleichsraum (21) angeordnet ist.

15. Drehschwingungsdämpfer nach einem der vorstehend genannten Ansprüche,
**dadurch gekennzeichnet, dass**
der Drehschwingungsdämpfer einen durch einen verschiebbaren Trennkolben (59) vom Ausgleichsraum (21) abgetrennten, einen Temperaturausgleich gewährleistenden Kompensationsraum (61) aufweist.

16. Drehschwingungsdämpfer nach einem der vorstehend genannten Ansprüche,
**dadurch gekennzeichnet, dass**
zwischen dem in den Ausgleichsraum (21) mündenden Verbindungskanal (19) und dem Trennkolben (59) ein Ventilträger (73) angeordnet ist, der mittels darin vorhandener Durchströmöffnungen (83) einen Druckabfall bewirkt, wenn der Druck im Verbindungskanal (19) größer ist, als der Druck im Kompensationsraum (61).

17. Drehschwingungsdämpfer nach einem der vorstehend genannten Ansprüche,
**dadurch gekennzeichnet, dass**
die Patrone (23) zumindest teilweise in eine Hülse (65) eingesetzt ist.

18. Drehschwingungsdämpfer nach Anspruch 17,
**dadurch gekennzeichnet, dass**
die Hülse (65) in ihrer Mantelfläche ein Strömungskanalsystem (67) aufweist, das eine Verbindung zwischen dem Ausgleichsraum (21) und zumindest einer der Strömungsverbindungen (17, 19) zu den Arbeitskammern (13, 15) bildet.

19. Drehschwingungsdämpfer nach Anspruch 17,
**dadurch gekennzeichnet, dass**
die Hülse (65) mit ihrer äußeren Mantelfläche zusammen mit der korrespondierenden, inneren Oberfläche des Rotors (11) ein Strömungskanalsystem (67) bildet.
